(19) Europäisches Patentamt
European Patent Office
Office européen des brevets

(11) Publication number: **0 095 356**
**B1**

(12) # EUROPEAN PATENT SPECIFICATION

(45) Date of publication of patent specification: **27.08.86**

(51) Int. Cl.[4]: **B 03 C 1/24,** H 02 K 41/025

(21) Application number: **83302923.4**

(22) Date of filing: **23.05.83**

(54) **Improvements in or relating to linear motor systems.**

(30) Priority: **26.05.82 GB 8215423**

(43) Date of publication of application:
**30.11.83 Bulletin 83/48**

(45) Publication of the grant of the patent:
**27.08.86 Bulletin 86/35**

(84) Designated Contracting States:
**AT BE CH DE FR GB IT LI LU NL SE**

(56) References cited:
**EP-A-0 014 564**
**EP-A-0 038 767**
**US-A-3 111 484**

**ENGINEERING AND MINING JOURNAL, vol. 152, no. 10, October 1951, pages 82,83,118, New York, US, S. EKETORP: "Three-phase A.C. can improve fine-size magnetic separation"**

(73) Proprietor: **Cotswold Research Limited**
**22 Upper Grosvenor Street**
**London W1X 0AP (GB)**

(72) Inventor: **Laithwaite, Eric Roberts**
**9 Shorecroft Aldwick**
**Bognor Regis West Sussex PO21 4AS (GB)**

(74) Representative: **Coxon, Philip et al**
**Eric Potter & Clarkson 14 Oxford Street**
**Nottingham NG1 5BP (GB)**

**EP 0 095 356 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to linear motor systems and more particularly to an improved design of linear motor and to a non-ferromagnetic metal sorting apparatus using such an improved motor.

Previous known designs of linear motor suitable for use in non-ferromagnetic metal sorting apparatus have a slot width considerably greater than the tooth width. This is in order to be able to obtain the extremely high flux density necessary for non-ferromagnetic metal sorting.

A metal sorting system comprising the features of the first part of claims 1 and 7 respectively is disclosed in EP—A—14564, which system uses such a motor for non-ferromagnetic metal sorting, the motor being forcibly cooled by the passage of cooling water through the hollow windings of the motor.

It is an object of the present invention to provide an improved linear motor for non-ferromagnetic metal sorting.

The present invention therefore provides a linear motor for non-ferromagnetic metal sorting including a winding for the motor, which winding is constructed to be capable of being forcibly cooled, characterised in that the tooth width X of the motor is equal to or greater than 60% of the tooth pitch Y.

In a preferred embodiment the tooth width is equal to 60% of the tooth pitch and the slot width is equal to 40% of the tooth pitch.

It is also an object of the present invention to provide an improved non-ferromagnetic metal sorting system for use with the improved linear motor.

The windings are preferably constructed from hollow conductive pipes through which, during operation of the linear motor, water is passed for cooling purposes.

The present invention will now be described by way of example with reference to the accompanying drawings in which:—

Figure 1 shows the tooth and slot arrangement of the linear motor according to the present invention;

Figure 2 shows a non-ferromagnetic metal sorting system incorporating a linear motor as shown in Figure 1;

Figure 3 shows the diamond arrangement of the windings of the motor of Figure 1;

Figure 4 shows the trapezoidal arrangement of the windings of the motor of Figure 1;

Figure 5 shows in greater detail the arrangement of the windings within each slot;

Figure 6 shows a cross-section through a winding;

Figure 7 shows a graph of Goodness Factor G versus Force/$I^2R$ loss;

Figure 8 shows a typical B—H magnetising curve for the motors part of the magnetic circuit;

Figure 9 shows a first modification of the sorting system of Figure 2;

Figure 10 shows a second modification of the sorting system of Figure 2; and

Figure 11 shows a fully wound linear motor in accordance with the present invention.

Referring now to Figure 1 there is shown a section through part of the stator of a linear motor according to the present invention. The tooth pitch is shown as Y and the tooth width as X. The width of each slot (Y—X) is seen to be less than the width X of the tooth. The depth of iron under the slot is not critical but in a preferred embodiment it is approximately equal to 3N×, where N is the number of slots per pole and phase.

In this embodiment the width of the tooth is greater than or equal to 60% of the pitch and therefore the slot width is less than or equal to 40% of the pitch. This relationship in which the tooth width is greater than the slot width is not immediately seen to be compatible with previously accepted designs of linear motor. This is because it has previously been accepted that in order to design a successful linear motor with a large air gap it was necessary to obtain a large slot area to be able to pass high currents through windings large enough in cross section as not to over heat.

It has now been found according to the present invention that the limiting factor in a linear motor with water cooled windings is the saturation of the iron in the stator and that this requires an increase in the area of iron in the stator. This is however only possible if the current density within the windings can be increased to compensate for the loss of area of the slots. The current density can however be increased by the action of water or similar liquid cooling which restricts the rise in temperature of the windings and therefore allows a greater continuous electrical current to be passed through a given slot area.

Thus in the present invention the tooth width is increased over previous designs until it exceeds the width of the slot. The current density for continuous operation of the motor is increased by the water cooling of the windings. By this increase both in the current density within the slots and the increase in area of the teeth the maximum flux density produceable by the linear motor is substantially increased. In a further preferred embodiment the tooth width is made equal to or greater than 70% of the tooth width.

Referring now to Figure 2, there is shown a non-ferromagnetic metal sorting system incorporating a linear motor with reference to Figure 1. The non-ferromagnetic material is deposited on to a conveyor belt 10 below which is mounted the linear motor 12. A chute 14 is arranged adjacent the linear motor 12 to collect non-ferromagnetic material removed from the conveyor by the linear motor and hopper 16 is used to store the material. Hopper 16 for example receives the material forced from the conveyor in the direction of the travelling wave field and hopper 16′ receives the non-ferromagnetic metal forced from the conveyor by backward rolling due to the magnetic field.

The linear motor 12 is supplied with electrical power via bus bars 18 from a power transformer 20. The

transformer 20 is connected via weather proof connectors 22 to capacitor banks 24 which provide the power factor control for the power supply to the linear motor.

Referring now to Figure 3 one system for the pattern of arrangement of the windings is the diamond pattern as shown. The windings are made from copper tubes of generally rectangular cross section and in the diamond pattern a large number of joints and/or bends per single turn are required—10 in all.

Referring now to Figure 4 an alternative trapezoidal pattern is shown. The number of joints and/or bends per turn is reduced to six. The diamond coil arrangement shown in Figure 3 however gives the most compact motor using 21% less copper than the trapezoidal coil design. Also the heat developed in the windings was found to be about 21% less for the diamond coils at 3.41 kWh whereas the trapezoidal coil heat losses were 4.13 kWh.

Referring now to Figure 5 there is shown the arrangement of the windings within a slot. Only two windings (tubes 30, 32) are present in each slot due to the large area required by each conductor. The tubes 30, 32 are separated by any suitable insulating board.

The cross section of a winding 30, 32 in Figure 5 is shown in Figure 6. Table 1 gives the performance of the windings with varying thickness of copper wall of the tubes.

Using the new design of linear motor the following practical observations were found with the non-ferromagnetic metal sorting system as shown in Figure 2.

The first long run of the motor was carried out on tap 4 of the transformer as defined in Table 2. The motor received the output from a fragmentiser after a 100 mm (4 inch) mesh screen had removed the smaller pieces. The improved performance compared with that of previous motor designs was at once apparent. (The force per piece of scrap was, multiplied by $(4960/2000)^2=6.15$ over previous systems.

Unless the pieces of scrap were entangled or directly blocked by a large piece of rubber tyre or a piece of ferrous material, virtually all metal pieces of this size were collected, including aluminium, aluminium alloy, copper, zinc, brass and lead. Only stainless steel remained uncollected.

What was particularly noteworthy was that flat metal pieces lying under a pile of combustibles, wire, etc. were pulled from underneath the pile assisted by downward induction forces that arise whenever conducting material is in close proximity to the pole force leaving the latter behind. Other pieces located on top of non-metal piles were also reclaimed since they receive an upward force due to induction, whilst pieces facing a large piece of rubber tyre could be seen to apparently "steer" themselves around the obstacle. The mixed metals collected appeared to contain well below 5% of combustibles by volume and therefore only 1 or 2% by weight.

On tap 3, the motor would tilt and spin a British 2p piece. On tap 4 it would do the same for a 1p piece and on tap 5 it would tilt and spin a 1/2p piece, and these coins are by no means pure copper.

Another feature was the variety of shapes that were collected. There were strips of aluminium about 1 cm wide and 30 cm long, bent so that only about 5 cm was in contact with the belt, the remainder projecting upwards to heights up to 10 cm above the belt. A most unusual piece consisting of a stack of very thin copper foil, desiccated and corroded until the electrical contact between neighbouring bits must have been very poor. A massive piece of lead rolled out in the direction of the field.

One of the most encouraging phenomena was the response of the motor to pieces of ferrous metal (from pieces weighing 5 lbs or more down to iron filings). The attractive forces between large pieces and the motor were of the order of 10 times their weight and this depressed the belt and bowed the stainless steel friction plate but the pieces continued to travel with the belt due to the very large frictional forces resulting from the vertical pressure. At the rear end of the motor, the field at the corner being stronger than that at any other part, the ferrous material would tend to stay, rolling over and over on the spot, depending on how closely its shape approached that of a cylinder or of a sphere. Even square section bars and blocks with their axes athwartships would flip over from face to face. But when the next asymmetric ferrous piece arrived it invariably dislodged the rolling piece and the system was self clearing of ferrous material. Even the iron filings were taken along attached to larger pieces. There will be no need for a wiper arm as in other known systems.

Since the non-ferrous metal that barely reaches the lip of the chute will also be cleared by larger pieces moving faster, no human operator will be needed to keep a continuous watch on the active area.

A further advantage of the system is that it will not collect any non-ferrous metal pieces that contain ferrous metal inclusions e.g. a steel bolt weighing 10 g is sufficient to prevent a piece of brass weighing 500 g in which it is embedded from being collected. This gives an absence of ferrous material in the metal collected which is of enormous advantage to the subsequent smelting process.

Shovels full of "fines" extracted by a heavy media plant were fed on to the belt. These consisted of mixed metal pieces mainly below 50 mm (2" size), together with stones, glass and other non-metals of approximately the same densities as those of metals. When the surface of the motor was almost covered with material, the whole motion resembles that of an ants' nest!. Some pieces, mostly cast aluminium of nearly cubical shape and less than 12.5 mm (1/2") side, roll vigorously backwards. Accordingly a delivery chute and hopper was provided on the opposite side of the belt as shown in Figure 2. About 80% of the metal was delivered to the output chutes, mostly by sliding, and there remained a sizable proportion of the metal which consisted of pieces of such size and shape that they both slid forwards and rolled backwards and ended up uncollected, since neither mode could dominate.

In the first design the motor pole face was covered with a sheet of stainless steel about 2.5 mm thick.

Whilst this does not consume large amounts of power due to short-circuit current (because of its very high resistivity) it does receive a lot of heat due to belt friction, especially when a large piece of ferrous material passes across the motor.

This minor problem may be demonstrated by switching off the ferromagnetic extractor (overband magnet) so that the main feed hopper becomes filled with ferrous scrap. The conveyor belt becomes filled completely with almost 100% ferrous scrap to a depth of 75 or 100 mm (3 or 4 inches). All of it was found to pass over the motor without moving, but smoke was emitted from under the belt which could have been caused by either:

(a) increased friction force as the result of a total downward force of the order of 20—30 kN or (b) excessive heating of the stainless steel sheet due to the sudden increase of Goodness Factor occasioned by the presence of "backing iron" as in a double-sided linear motor.

The Goodness Factor G (Laithwaite, E. R. The Goodness of a machine PROC IEE March 1965 Vol 112 pp 538—541) approach to electromagnetic machine theory is explained below.

The factors that make up G are:—

$$G=\frac{2\cdot p^2\cdot \mu_o\cdot f}{\pi\cdot \rho_r\cdot g}$$

where p is the pole pitch, $\mu_o$ the free-space permeability, f the supply frequency, $\rho_r$ the surface resistivity of the secondary conductor and g the effective airgap. For an open-sided motor $g=p/\eta$ and the equation effectively becomes

$$G=\frac{2pf\mu_o}{\rho_r}$$

Incidentally 2pf is the velocity ($v_s$) of the travelling field so that, even more simply, $G=\mu_o v_s/\rho_r$.

Now in this particular application, the use of larger pole pitches, and therefore velocities, encourages the backward rolling phenomenon which we would like to minimise. But too low a value of p (and therefore $v_s$) lowers G below the critical value of unity, for the larger pieces of scrap. Consider, for example, the whole of the motor to be covered with a single sheet of aluminium 6 mm (1/4") thick, overlapping sufficient for end effects to be negligible. In the Prototype machine p=0.1 metres

$$\rho_r=\frac{2.65\times10^{-8}}{0.25\times0.0254}=4.17\times10^{-6}\text{ ohm},\ \mu_o=4\eta\times10^{-7}.$$

Hence, at 50 Hz, $G\approx3.0$. This figure would be maintained for smaller pieces shown to the size of half a pole pitch in the direction of motion of the field. Laithwaite, E. R.: *Linear Electric Motors* (Mills and Boon, 1971). Reductions in width involve a reduction as soon as the width of the sheet becomes less than that of the motor, thereafter falling off almost linearly until the width is considerably less than the length in the orthogonal direction. These latter reductions are extremely complex to evaluate, but reliable experimental evidence was published in 1960. Laithwaite, E. R. and Nix, G. F. "Further developments of the self-oscillating induction motor", *Proc. IEE,* October 1960, Vol. 107A, p. 476—486), fig. 8. Open-sided motors are not as prone to reduction of G due to this effect, and a reasonable estimate therefore is a factor of about 1.5 making G=2 for sizes of 50×50 mm (2"×2"), which calculations fixed the value of p. At this size it can be expected that reasonably flat pieces will slide rather than roll.

Now the purpose of water cooling, indeed the whole basis for the design of the improved motor was to enable much smaller flat pieces to be extracted by sliding, for the initial tests had suggested that at current densities approaching 80 A/mm$^2$ (50,000 amps/sq. inch) (Household wiring is rated at 1.6 A/mm$^2$ (1000 amps/sq. inch), fan-cooled induction motors at 4.7 A/mm$^2$ (3000 amps/sq. in) and aircraft alternators at 20 A/mm$^2$ (13,000 amps/sq. in)) the system could withstand the almost shear drop in specific force that occurs around the value G=1 and go on to as far as G=0.2 perhaps. This is indeed the case, so long as size is the only factor working against the system. But when resistivity also is involved, something better will ne needed and it is at this point that we must obtain help from a controllable frequency.

Analogous phenomena to the steep slope at G=1 occur in vacuum valves, transistors and thyristors and in ferromagnetic materials (the B—H curve shown in Figure 8 is very similar to the specific force −G of curve of Figure 7). These have long been seen as the basis for making amplifiers, and a well-known property of amplifiers is that they can be made frequency-selective. This promises a reward in separation of the different metals of roughly the same size. For each given size group, the supply frequency can be chosen so that the average value of G is 1.5 for the most conductive metal, and if the next most conductive is worse by a factor of 2, the specific force could fall by a factor of 7 or more, as shown by the dotted lines on Figure 5.

If we examine the range of resistivities we can see whether steps of 2 or more occur between the

resistivities alone, or what is more relevant from a sliding point of view, the resistivity-density product. (The resistivity alone will be relevant to rolling pieces.)

| Metal | Resistivity ×$10^8$ ohm-m | Resistivity ×density (defining density of Al as 1.0) | Differentiating factors (and comments) |
|---|---|---|---|
| Aluminium | 2.65 | 2.65 | |
| | | 5.17 to 11.46 | at least 1.95:1 |
| Aluminium alloy | >5.0, variable | depending on content | |
| | | | 2.1 times copper but totally confused with aluminium alloy |
| Copper | 1.7 | 5.6 | |
| | | | 2.8 times copper, slight overlap with Al. alloy |
| Zinc | 5.9 | 15.5 | |
| | | | 1.6 times zinc, slight overlap |
| Brass | 8.0 | 25.1 | |
| | | | 4.2 times brass |
| Lead | 21.0 | 87.9 | |
| | | | only 1.1 times lead—total confusion |
| Bronze | 30.0 | 97 | |
| | | | 4.5 times bronze and lead |
| Stainless steel | 140 | 440 | |

The value of G for stainless steel sheet (composition 18 Cr 18 Ni) of resistivity 96×$10^{-8}$ ohm-m, at a pole pitch of 10 cm (neglecting end resistance and assuming the airgap to be filled with stainless steel) in a double-sided motor, is 0.4. Without the ferrous backing, it would be of the order of 0.03.

It was also noted that the conveyor belt originally used was joined using steel lacing which presented about a 2" wide strip of backing steel as it passed over the motor. It would be desirable to replace this with a non-metallic band, or at least with stainless steel wire. In a preferred embodiment a moulded plastic material (AMMRAAL NOMEX A18 fine square smooth bottom) was used for the belt. The belt was made in "one piece" by welding the ends of the belt together.

The heating of the stainless steel plate, for whatever reason, caused it to bow, leaving a 19 mm (3/4") gap in the centre of the motor. It is proposed to use thin non-metallic sheet such as P.T.F.E. as a substitute, anchored only at the entry end, so that the belt will always hold it smoothly down. If it wears out in as short a time as a working day, it may be worthwhile to replace it daily. Much of the backward rolling experienced with the smaller-sized material is due to its being held above the motor by a distance equal to the sum of belt thickness (≈25 mm) (≈1") gap caused by bowing of the plate (≈19 mm) (≈0.75") and the plate itself (≈2.5 mm) (0.1"), a total gap of (47 mm) (1.85") plus half the scrap thickness. At such a height backward rolling is clearly encouraged.

Thus using a water-cooled linear motor according to the present invention together with the appropriate design of conveyor belt system a sorting apparatus may be designed which cannot only sort non-ferromagnetic metals from scrap material from which all ferromagnetic material has been removed but can also cope with the presences of ferrous material which in previous systems would have clogged the conveyor.

In a practical system the motor used was approximately 600 mm (2 foot) square and 50 mm (2 inches) thick with 3 slots per pole. This gave a pole pitch of 70 mm (2.3/4 inches) and 30 slots per motor. The conductor design chosen was trapezoidal and a conductor of 14 mm×10 mm rectangular cross section and wall thickness of 2.5 mm was used. The slot depth was 3 cm and the water flow used was 30 litres per minute per phase.

When linear motors are used in a non-ferromagnetic sorting system as shown in Figure 2 a certain proportion of the non-ferromagnetic metal is not collected.

Of the non-ferrous metal that is not collected by the prototype machine, by far the largest portion consists of medium sized pieces of roughly the size of a golf ball and mostly approximately to cubical or spherical shape. The reason for this is that they are equally prone to roll backwards and to slide forwards and spend their time over the linear motor doing some of each alternately. They are thus not collected by the hoppers at either side of the belt. When they spin they tend to bounce on a corner (not being truly spherical). Whilst they are airborne they are propelled by the linear component of the magnetic field and gain as much distance forwards as they have lost during backward rolling. When they strike surface again a projection on them gives them another rotary flick backwards. This process continues all the way across the belt and they end up passing over the motor entirely without ever having "reached a decision" as to whether to roll or to slide.

Various devices have been tried to combat this with varying degrees of success. Two solutions are illustrated in Figures 9 and 10.

In the embodiment of Figure 9 pieces of rectangular section plastic (or similar) strip 40 are glued or otherwise fixed to the belt 10 athwartships at intervals varying from a metre to several metres. This allows the indeterminate pieces 42 a better "bite" on the belt and more are collected by rolling backwards.

In the embodiment of Figure 10 the belt 10 is tilted in its direction of motion, as shown. As soon as rolling occurs, the indeterminate pieces 42 tend to roll back down the slope. If they accumulate in a row 44 across the entry edge, their spin agitation soon causes collisions between them which ultimately flick them off the belt on one side or the other and the accumulation never builds up beyond a single row. Unfortunately this can, if overdone, cause them to flick off undesirable pieces such as stone, rubber, etc. The slope must, of course, not be such as to cause flat pieces of non-metal 46 to slide or roll back. Adjustment of the belt slope is suggested as an added improvement so that the operator can set his own machine for optimum performance.

A combination of the embodiments of Figures 9 and 10 can also prove beneficial. The use of the lateral slats 40 also has the beneficial effect of wiping ferrous dust from the belt opposite the motor edges, where it tends to accumulate.

This introduces a second problem, i.e. erosion of the surface of the motor by iron filings, ferrous silicon dust and other ferrous particles which, spinning at 3000 r.p.m. or vibrating at 50 Hz, soon drill holes in the epoxy resin of the motor top and even the water cooled conductors themselves. Various surfaces have been tried for the motor with some improvement, but the most successful device so far consists in making the belt much wider than the motor and folding it down by means of rollers, along the lateral edges of the motor, so that no particles can ever get underneath the belt. At the same time a scraper 48 (Figure 9) on the underside of the belt removes any particles which may have stuck there due to magnetic attraction on the previous circuit.

With reference to Figure 11 it is advantageous to use a fully wound linear motor. For practical reasons of winding, it is usual to leave a motor with a one slot per pole and phase winding with 2 or 3 half empty slots 52 at each end as shown in Figure 11a, for convenience of not having to accommodate the return conductors around the ends of the machine, in a bunch.

But such a machine does not have a perfect travelling field (Figure 11b) right up to the edge and smaller sliding pieces in particular tend to stop at A and not be collected (the momentum of larger pieces is usually responsible for carrying them beyond A and into the hopper). In addition, ferrous dust also tends to congregate at A.

With a fully wound linear motor as shown in Figure 11c the flux amplitude distribution is as shown in Figure 11d. This provides a larger flux at the extreme edges A, I of the linear motor and thus smaller sliding pieces are propelled over the edge of the linear motor and are collected by the hopper 16 or 16' (Figure 2).

**Claims**

1. A linear motor (72) for non-ferromagnetic metal sorting including a winding for the motor, which winding is constructed to be capable of being forcibly cooled, characterised in that the tooth width (X) of the motor is equal to or greater than 60% of the tooth pitch (Y).

2. A linear motor as claimed in Claim 1 characterised in that the windings of the motor are constructed from hollow tubes (30) and in which cooling water is passed down the tubes to provide cooling for the motor.

3. A linear motor as claimed in Claim 1 or Claim 2 characterised in that the tooth width (X) is equal to or greater than 70% of the tooth pitch (Y).

4. A linear motor as claimed in any one of Claims 1 to 3 characterised in that the windings are in a diamond formation (Fig. 3).

5. A linear motor as claimed in any one of Claims 1 to 3 characterised in that the windings are in a trapezoidal formation (Fig. 4).

6. A linear motor as claimed in any one of Claims 1 to 5 characterised in that the motor is fully wound to give a complete travelling field.

7. A non-ferromagnetic metal sorting apparatus including a linear motor (12) including a winding, which winding is constructed to be capable of being forcibly cooled, and including a belt (10) on which

scrap material is carried past the linear motor, characterised in that the tooth width (X) of the motor is equal to or greater than 60% of the tooth pitch (Y).

8. A non-ferromagnetic sorting apparatus as claimed in Claim 7 characterised in that a thin non-metallic sheet is placed between the linear motor (12) and the belt (10).

9. A non-ferromagnetic sorting apparatus as claimed in Claim 7 characterised in that pieces of strip material (40) are fixed to the belt at intervals.

**Patentansprüche**

1. Linearmotor (12) zum Sortieren nichtferromagnetischen Metalls, mit einer Wicklung für den Motor, die derart konstruiert ist, daß sie in der Lage ist, zwangsgekühlt zu werden, dadurch gekennzeichnet, daß die Zahnbreite (X) des Motors gleich oder größer als 60% der Zahnteilung (Y) ist.

2. Linearmotor nach Anspruch 1, dadurch gekennzeichnet, daß die Windungen des Motors aus Hohlrohren (30) konstruiert sind und wobei Kühlwasser die Rohre hinab geleitet wird, um eine Kühlung für den Motor zur Verfügung zu stellen.

3. Linearmotor nach Anspruch 1 oder 2, dadurch gekennzeichnet, daß die Zahnbreite (X) gleich oder größer als 70% der Zahnteilung (Y) ist.

4. Linearmotor nach einem der Ansprüche 1 bis 3, dadurch gekennzeichnet, daß die Windungen diamantenförmig sind (Fig. 3).

5. Linearmotor nach einem der Ansprüche 1 bis 3, dadurch gekennzeichnet, daß die Windungen Trapezform aufweisen (Fig. 4).

6. Linearmotor nach einem der Ansprüche 1 bis 5, dadurch gekennzeichnet, daß der Motor voll gewickelt ist zur Erzeugung eines vollständigen Wanderfeldes.

7. Sortiervorrichtung für nichtferromagnetisches Metall enthaltend einen Linearmotor (12) mit einer Wicklung, die derart konstuiert ist, daß sie in der Lage ist, zwangsgekühlt zu werden, sowie mit einem Band (10), auf dem Abfallmaterial an dem Linearmotor vorbeibefördert wird, dadurch gekennzeichnet, daß die Zahnbreite (X) des Motors gleich oder größer als 60% der Zahnteilung (Y) ist.

8. Nichtferromagnetische Sortiervorrichtung nach Anspruch 7, dadurch gekennzeichnet, daß eine dünne nichtmetallische Platte zwischen dem Linearmotor (12) und dem Band (10) angeordnet ist.

9. Nichtferromagnetische Sortiervorrichtung nach Anspruch 7, dadurch gekennzeichnet, daß Stücke von Leistenmaterial (40) an dem Band in Intervallen befestigt sind.

**Revendications**

1. Moteur linéaire (12) pour le tri de métaux non ferromagnétiques, comprenant un enroulement pour le moteur, lequel enroulement est construit pour être capable de subir un refroidissement forcé, caractérisé en ce que la largeur (X) des dents du moteur est égale ou supérieure à 60% du pas (Y) de ces dents.

2. Moteur linéaire tel que revendiqué dans la revendication 1, caractérisé en ce que les enroulements du moteur sont construits en tubes creux (30) dans lesquels de l'eau de refroidissement est mise en circulation dans les tubes pour assurer le refroidissement du moteur.

3. Moteur linéaire selon la revendication 1 ou la revendication 2, caractérisé en ce que la largeur (X) des dents est égale ou supérieure à 70% du pas (Y) de ces dents.

4. Moteur linéaire selon l'une quelconque des revendications 1 à 3, caractérisé en ce que les enroulements ont une conformation en losange (Fig. 3).

5. Moteur linéaire selon l'une quelconque des revendications 1 à 3, caractérisé en ce que les enroulements ont une conformation trapézoïdale (Fig. 4).

6. Moteur linéaire selon l'une quelconque des revendications 1 à 5, caractérisé en ce que le moteur est entièrement bobiné pour donner un champ progressif complet.

7. Appareil de tri de métaux non ferromagnétiques comprenant un moteur linéaire (12) comprenant un enroulement construit pour être capable de subir un refroidissement forcé, et comprenant une courroie (10) sur laquelle des déchets à trier sont transportés en passant devant le moteur linéaire, caractérisé en ce que la largeur (X) des dents du moteur est égale ou supérieure à 60% du pas (Y) de ces dents.

8. Appareil de tri de métaux non ferromagnétiques tel que revendiqué dans la revendication 7, caractérisé en ce qu'une feuille mince non métallique est placée entre le moteur linéaire (12) et la courroie (10).

9. Appareil de tri de matières non ferromagnétiques tel que revendiqué dans la revendication 7, caractérisé en ce que des tronçons (40) de barrettes sont fixés à intervalles sur la courroie.

## TABLE 1.

| | | WALL THICKNESS 2mm | 2·5mm | 3·mm |
|---|---|---|---|---|
| COPPER AREA $mm^2$ | | 80 $mm^2$ | 95 $mm^2$ | 108 $mm^2$ |
| WATER AREA $mm^2$ | | 60 $mm^2$ | 45 | 32 |
| $R_{20°C}$ / METRE | | $2{\cdot}155 \times 10^{-4}\ \Omega/m$ | $1{\cdot}8147 \times 10^{-4}$ | 1·5[illegible]3 $\times 10^{-4}$ |
| TRAPEZOIDAL COILS (24) + CONNECTION | $R_{20°C}$ | $6{\cdot}833 \times 10^{-3}$ | $5{\cdot}754 \times 10^{-3}$ | $5{\cdot}0615 \times 10^{-3}$ |
| AT 1000A. | $I^2 R_{20°C}$ W-HR | 6833 WATTS HR | 5754 W-H | 5061 W-H |
| WATER TEMP RISE °C 3 LIT/MIN. | | 32·69 °C. | 27·53 | 24·22 |
| 4·5 LIT/MIN | | 21·8 | 18·35 | 16·15 |
| 6·0 LIT/MIN | | 16·35 | 13·77 | 12·11 |
| 7·5 LIT/MIN. | | 13·1 | 11·01 | 9·69 |
| AT 1000A. AMPS/$mm^2$ | | 12·5 A/$mm^2$ | 10·53 | 9·26 |
| TOTAL COPPER WEIGHT | | 22·33 Kg | 26·51 Kg | 30·14 Kg. |

TABLE 2

| Tap no. | Nominal line volts | Measured line volts | Motor current (A/phase) | Transformer input current (A/phase) | Calculated input current (A) | Water temps. (°C) in | Water temps. (°C) out | Busbar temp. (°C) |
|---|---|---|---|---|---|---|---|---|
| 1 | 69 | 67 | 2750 | 480 | 465 | 20 | 41 | 37 |
| 2 | 75 | 73 | 2995 | 380 | 390 | 20 | 49 | 40 |
| 3 | 82 | 77 | 3160 | 290 | 320 | 20 | 55 | 48 |
| 4 | 93 | 87 | 3600 | 210 | 210 | 22 | 63 | 59 |
| 5 | 104 | 95 | 4140 | 370 | 410 | 26 | 75 | 70 |
| 6 | 120 | 105 | 4960 | 550 | 530 | 36 | 95 | 85 |
| 7 | 138 | - | - | - | >700* | - | >100* | 110* |

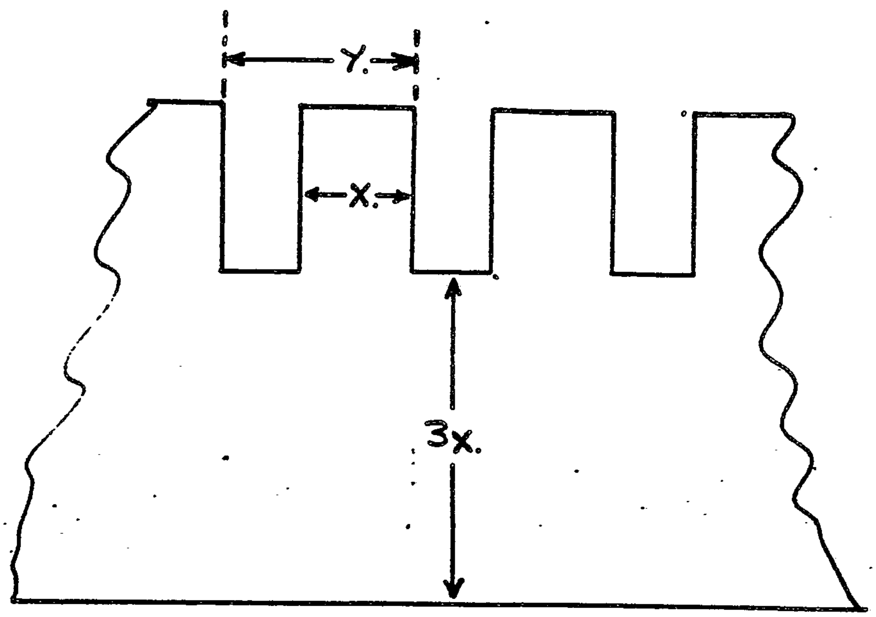


Fig 1.

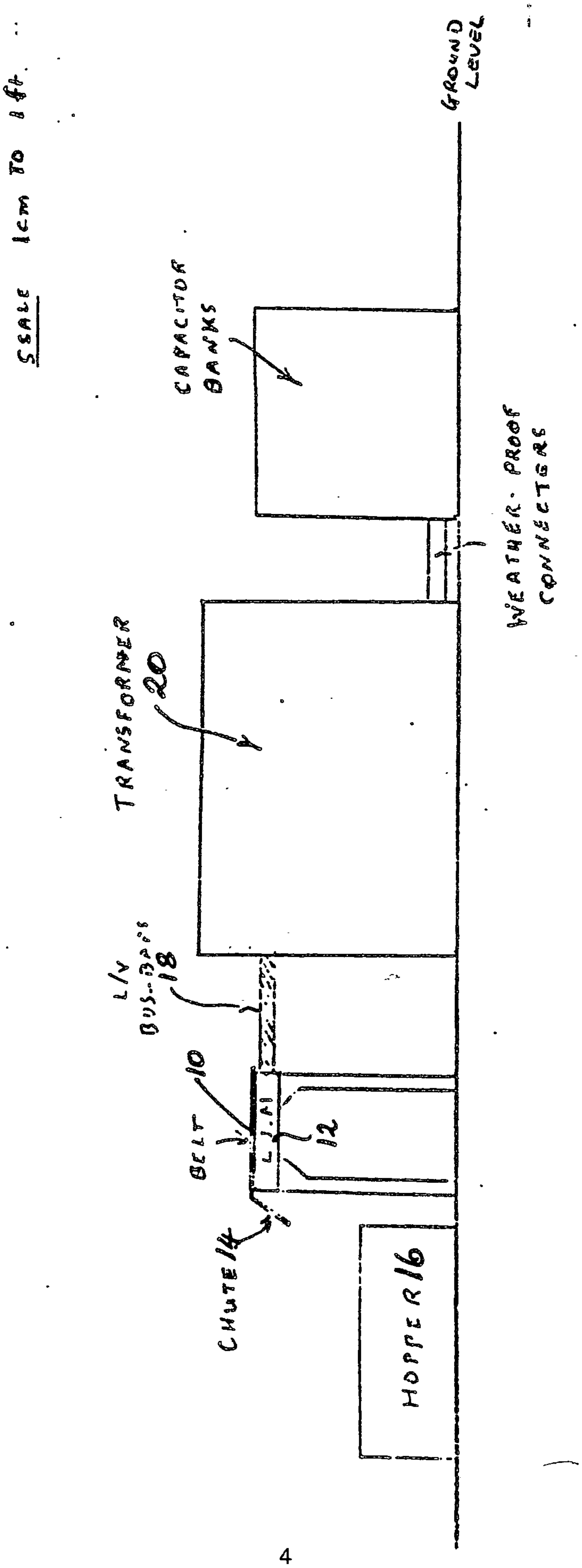
SCALE 1cm TO 1ft.
GROUND LEVEL
CAPACITOR BANKS
WEATHER-PROOF CONNECTORS
TRANSFORMER 20
L/V BUS-BARS 18
10
BELT
12
CHUTE 14
HOPPER 16

FIG 2.

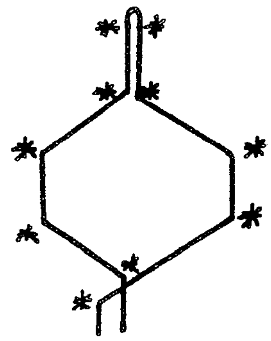

Fig 3.

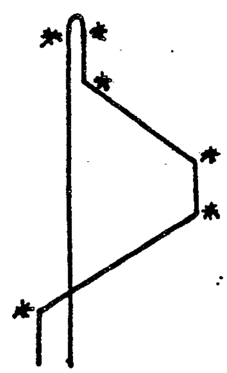

Fig 4.

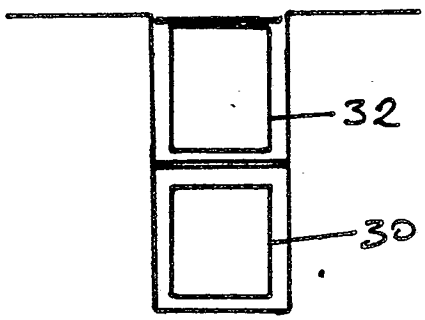


Fig 5.

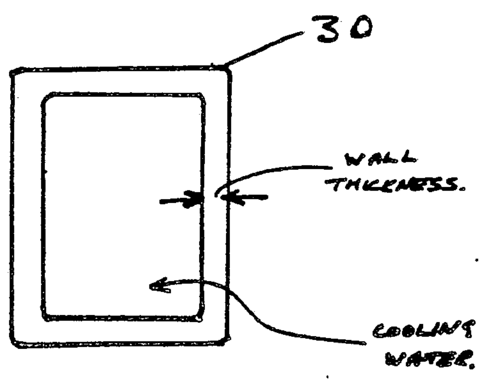


Fig 6.

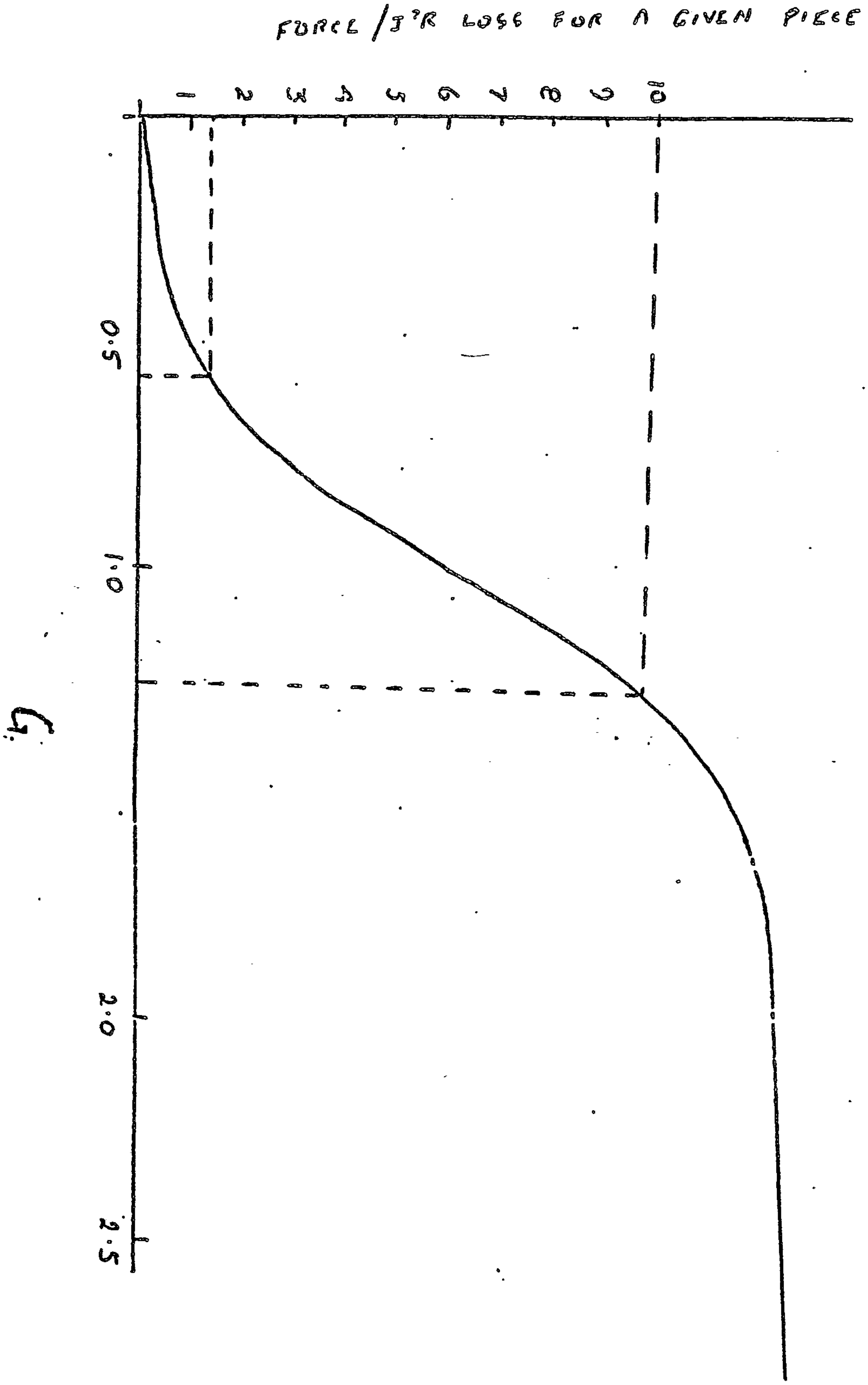


FIG 7.

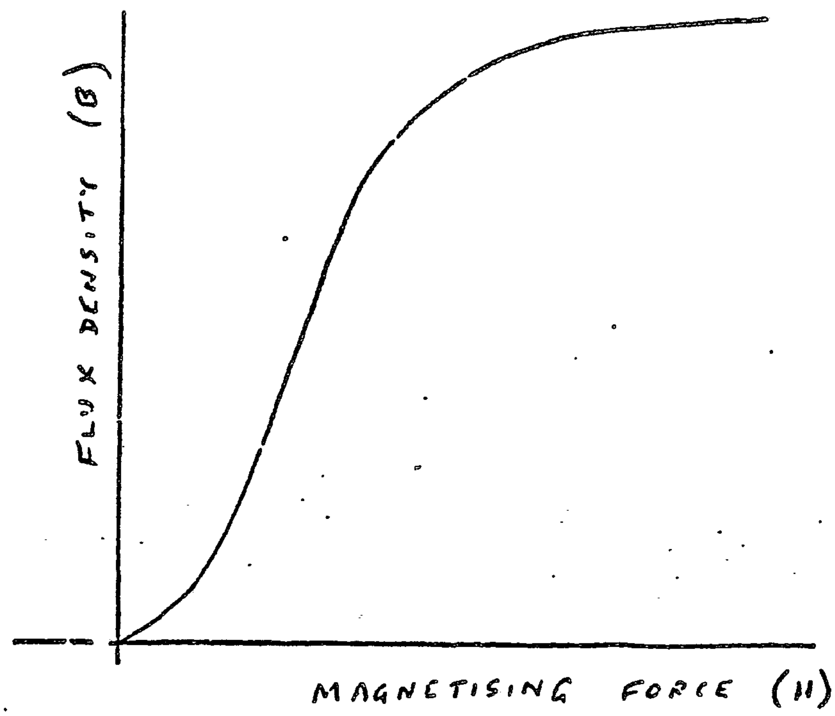


FIG. 8.

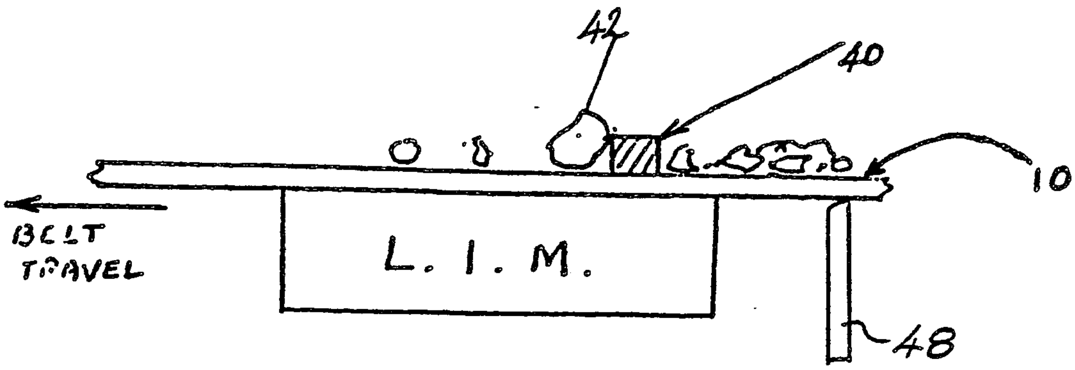


FIG. 9

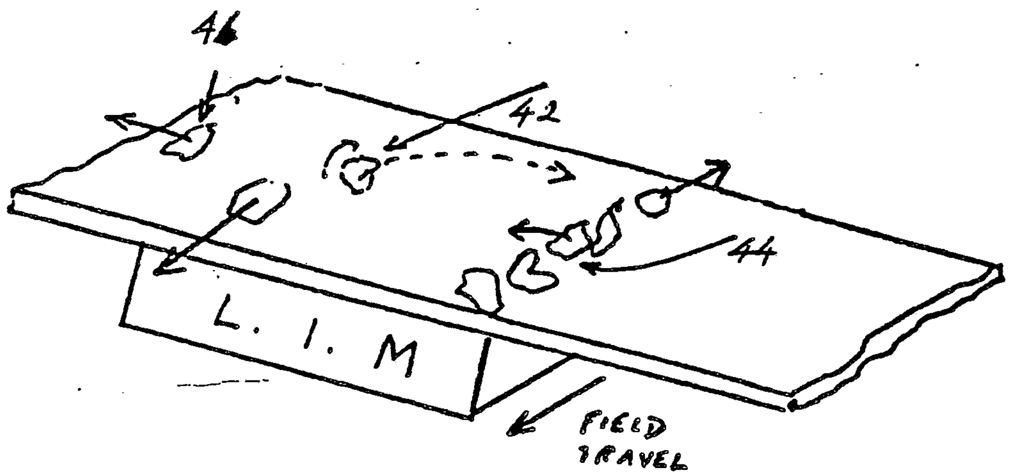


FIG 10.

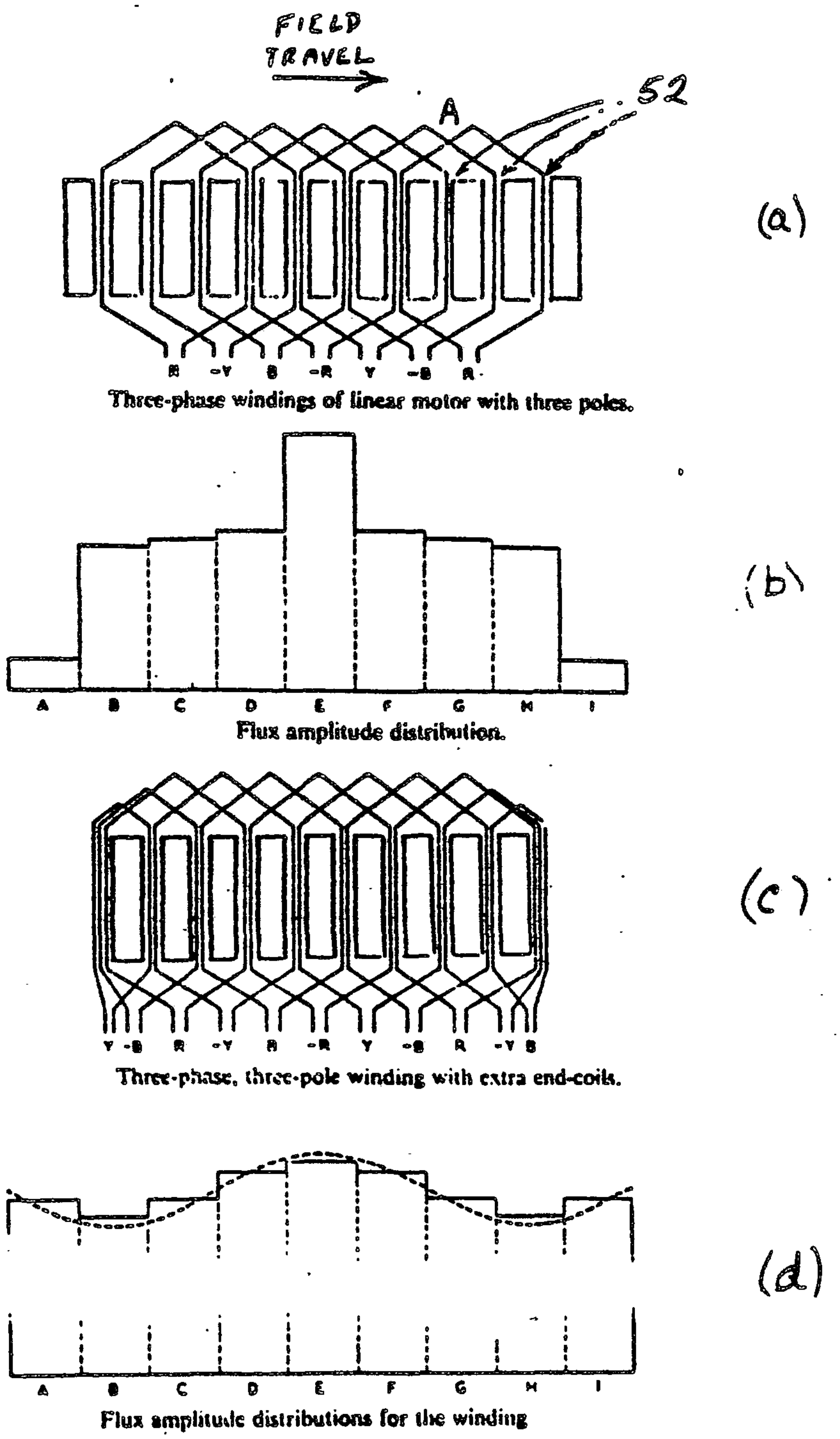
FIELD
TRAVEL
A
52
(a)
R -Y B -R Y -B R
Three-phase windings of linear motor with three poles.
(b)
A B C D E F G H I
Flux amplitude distribution.
(c)
Y -B R -Y B -R Y -B R -Y B
Three-phase, three-pole winding with extra end-coils.
(d)
A B C D E F G H I
Flux amplitude distributions for the winding

FIG. 11